# EUROPEAN PATENT SPECIFICATION

(11) **EP 2 699 722 B1**
(45) Date of publication and mention of the grant of the patent: **25.03.2015**
(21) Application number: 12713181.1
(22) Date of filing: 13.04.2012
(51) Int. Cl.: D06C 3/00, F26B 13/10, F26B 23/00, F28F 9/22, F28D 21/00, D06C 7/00, F28D 7/10

(54) **TEXTILE PROCESSING MACHINE WITH HEAT RECOVERY**
TEXTILVERARBEITUNGSMASCHINE MIT WÄRMERÜCKGEWINNUNG
MACHINE DE TRAITEMENT DES TEXTILES À RÉCUPÉRATION DE CHALEUR

(30) Priority: 19.04.2011 IT FI20110076
(43) Date of publication of application: 26.02.2014
(73) Proprietor: Unitech Textile Machinery S.p.a., 59013 Oste-Montemurlo (Prato) (IT)
(72) Inventor: PIATTELLI, Andrea, I-51016 Montecatini Terme (PT) (IT)
(74) Representative: Mannucci, Michele
(86) International application number: PCT/EP2012/056751
(87) International publication number: WO 2012/143292

(56) References cited:
- EP-A1- 0 127 761
- EP-A1- 0 523 684
- EP-A1- 0 682 214
- EP-B1- 0 582 077
- EP-B1- 0 648 882
- DE-A1- 3 010 269
- DE-A1- 3 012 880
- DE-A1- 19 601 759
- GB-A- 2 118 222
- GB-B- 2 000 263

## Description

### Technical Field

The present invention relates to textile processing machines, in particular to the machines for processing fabrics through hot air flow.

In particular, although not exclusively, the invention relates to improvements to the so-called stenters.

### State of the Art

Hot air treatments of the fabric are often used in producing and processing both knitted and woven fabrics. A machine typically used to this end is the so-called stenter, wherein a pair of chains transport a continuous fabric along a feed path defined between two blowers arranged above and below the fabric path. The blowers comprise channels, into which hot air is blown and which are provided with holes or apertures directed towards the respective face of the fabric moving between the blowers. The hot air hits the fabric and processes it, for instance causing drying, shrinkage and stabilization thereof.

The air used in these machines can be heated in a heat exchange battery, through for instance resistors, heat-transferring fluid circulation tubes or otherwise. Air heating usually occurs through gas combustion directly in air vein. In this case the gaseous fuel (for instance methane) is fed to a burner and the burner flame is directly arranged inside the air flow circulating inside the machine. Actually the air flow is a flow of air and combustion fumes. Within the present description and the attached claims, "air" means therefore a gaseous mixture that can be constituted by ambient air or that can also contain combustion fumes in addition to ambient air.

To reduce energy consumption, air recirculation is usually provided in this type of machines. However a circulating air fraction, typically 5-30% in volume, is exhausted from the machine through a stack or so-called exhauster. This air is replaced with fresh ambient air sucked inside the machine. The objects of partially exhausting the air circulating in the machine are numerous. In particular, the air change purpose is exhausting both the steam extracted from the fabric under processing and other residues, such as residues of additives used on the fabric for purposes known to those skilled in the art.

This even reduced percentage of exhausted air results in heat energy loss.

Stenters have been produced with a heat recovery exchanger on the air exhauster in order to reduce this loss. CN201081573Y and DE-3010269 disclose a machines of this kind. In these known machines, heat recovery is obtained through an air/air exchanger on the exhauster. The exhausted air conveyed towards the exhaust stack practically passes in a heat exchange battery where it exchanges heat with an air flow fed to the machine.

This solution entails great problems, among which a great bulk and a high cost of the air/air exchanger.

It should be furthermore noted that the air delivered from the exhauster contains residues of substances extracted from the fabric, typically components of the paraffin usually applied during production to the fabrics. The paraffin and the water vapor contained in the exhausted air condensate inside the air/air exchanger, thus forming a debris layer on the heat exchange surfaces. This debris reduces the exchanger efficiency. The air/air exchanger requires periodical cleaning operations. Cleaning occurs by means of a saturated vapor source that is arranged inside the heat exchange unit and that blows great vapor quantities into the exchanger at given intervals. For these cleaning operations a great part of the heat energy recovered by the exchanger is used, and this makes the heat balance uneconomical.

### Summary of the Invention

The object of the present invention is to provide a machine allowing a better heat recovery and solving at least partially one or more drawbacks of the prior art.

According to another aspect, the object of the invention is to provide a more efficient heat recovery method in textile processing machines.

According to a first aspect the invention substantially concerns a machine according to claim 1, said machine comprising: a fabric feed path; at least one system for hot air circulation through the fabric; at least one air heating system; an exhauster to eject a part of the air from said machine; at least one inlet for sucking ambient air inside said machine. The machine comprises a heat recovery circuit with at least one heat recovery exchanger for recovering heat from the air fed to the exhauster and at least one heat transfer exchanger for transferring heat to a flow of ambient air sucked in the machine by the fan which circulates the hot air through the machine and towards the fabric. The heat transfer exchanger is advantageously arranged at an ambient air suction inlet, so that ambient air sucked by the fan inside the machine flows through the heat transfer exchanger and is pre-heated before entering the machine and the heating system inside the machine. The fan is arranged in the machine and is therefore downstream the heat transfer exchanger, i.e. the air flows through the heat transfer exchanger by effect of a lower pressure inside the machine, which causes ambient air to flow through the heat transfer exchanger. An auxiliary external fan is not required.

EP0127761 discloses a heat recovery system for a generic fabric treating machine. The features and structure of the treating machine are not disclosed. The heat recovery system includes a heat exchanger arranged inside the exhauster, and requires therefore a filter to remove debris upstream of the heat exchanger. The heat exchanger obstructs the air flow at the exhauster, anyhow. moreover, heat is transferred from the liquid flowing in the circuit by forcing ambient air through heat transferring exchangers. This requires additional fans arranged outside the machine, in addition to those provided in the machine itself for circulating air in the fabric treating machine. This increases costs and energy consumption, thus reducing the overall system efficiency and moreover reduces the reliability of the entire arrangement.

According to the present invention, conversely, the air entering the machine is sucked by the same fans that make it circulate in the machine. For this reason, the heat exchange does not entail additional energy consumptions for the fluid circulation, except for the very limited quantity of energy required for operating the circulation pump of the heat-transferring fluid, typically water or a water/ethylene glycol mixture. Moreover no additional fans are required, manufacturing and maintenance costs are reduced and the overall reliability and efficiency of the machine is increased.

As mentioned above, "air" at the exhauster means air, or fumes deriving from the combustion of the gas used for air heating, or an air/fumes mixture. A heat-transferring fluid, and more specifically a heat-transferring liquid circulating in the exchangers absorbs heat from the air fed to the exhauster and releases heat through said heat transfer exchanger.

The heat recovered from the exhausted air is thus directly used for pre-heating at least a part of the ambient air sucked inside the machine to replace the air exhausted from the exhauster. The recovered heat is used to reduce the heat energy necessary for heating the air circulating in the machine.

In some embodiments a single heat recovery exchanger can be provided, arranged for instance on the exhauster or stack. In other embodiments more heat recovery exchangers are provided, arranged in a plurality of parts of an air ejection circuit for ejecting air through said exhauster, for instance on the stack and on a series of discharge channels for the air taken from different points of the machine and conveyed towards a sucker associated with the exhauster.

The heat recovery can occur through a single heath transfer exchanger or through more exchangers.

The heat recovery exchanger can comprise a tube bundle designed in various ways, in thermal contact with an air passage channel. The tube bundle can comprise a plurality of heat-transferring fluid circulation tubes parallel to the air circulation channel. In some embodiments the bundle tubes can be outside the air channel. In other embodiments the heat-transferring fluid circulation tubes ca be inside the air passage channel and can be provided for instance with fins to increase heat exchange.

To obtain a simpler heat exchanger, easier and less expensive to manufacture and maintain, which does not compromise the correct exhausted air flow towards the exhauster, according to the invention a heat recovery exchanger is provided, comprising an inner air passage surrounded by an outer passage for said heat-transferring fluid. In preferred embodiments, the heat recovery exchanger comprises: an inner tubular jacket defining an air passage towards the exhauster; an outer tubular jacket; a space between the inner tubular jacket and the outer tubular jacket for the circulation of said heat-transferring fluid.

A recovery heat exchanger structured in such way is particularly advantageous since collection of debris on the heat exchanging surfaces is prevented or greatly reduced. No heat exchanging pipes, fins or other components obstruct the cross section of the air flow passage.

When an outer space surrounding the tubular jacket is provided, said space can be single and can extend from an inlet to an outlet of the heat-transferring fluid. In preferred embodiments of the invention the space is subdivided into a plurality of cylindrical chambers with annular cross section, arranged in series and separated from one another by a plurality of annular separating walls. To increase the heat exchange efficiency, in some embodiments separating walls are provided, comprising passage holes to allow the heat-transferring fluid to flow from one annular cylindrical chamber to the other. In some embodiments the separating walls advantageously have passage holes on a limited portion of their circumferential extensions and adjacent separating walls are arranged with the respective passage holes angularly staggered relative to one another to impart to the heat-transferring fluid a movement with an axial component and a circumferential component around the axis of the annular cylindrical chamber.

To obtain a more effective heat recovery, a plurality of heat recovery exchangers can be provided, arranged in series and in parallel on air ducts towards said exhauster. In some embodiments the machine comprises: a fan for supplying air towards the exhauster; a plurality of suction channels connected to an inlet of the fan; a discharge channel connecting the fan outlet to the exhauster; a plurality of heat recovery exchangers on the suction channels; and at least one heat recovery exchanger on said discharge channel. The heat recovery exchanger on the discharge channel can be inserted in a hydraulic circuit of the heat-transferring fluid, in series and upstream of a plurality of heat recovery exchangers in parallel with one another and arranged on the suction channels. One or more heat recovery exchangers can be arranged on each suction channel, the exchangers associated with a channel being mutually arranged in series.

The heat recovery exchangers are preferably countercurrent exchangers.

The heat transfer exchanger, i.e. the exchanger where the recovered heat is transferred from said heat-transferring fluid to the air sucked from the ambient in the textile processing machine, can be obtained for instance with a tube bundle with preferably finned tubes. In some embodiments one or more tubes can be provided, which are coil-shaped or rectilinear and extending between two collectors. The tube shape, number and arrangement can depend upon the methods of using the recovered heat. In some embodiments the heat can be transferred through a plate heat exchanger, wherein at one side circulates the heat-transferring fluid recovering heat from the exhauster, and at the other side a (gaseous or liquid) fluid circulates, heated by means of the heat recovered from the exhauster.

The use of a heat recovery circuit, wherein a heat-transferring fluid circulates in at least a first, heat recovery exchanger and a second, heat transfer exchanger, allows to associate a control system with the heat recovery system, for controlling the flow of the heat-transferring fluid in order to maintain the air temperature at the exhauster always above a minimum threshold to avoid mist. An electronic control can be typically provided, for instance through a PLC controlling the speed of a circulation pump according to one or more parameters. The control parameter, or one of the control parameters, can be the air flow temperature at the exhauster, measured for instance near the stack outlet. For example, the heat-transferring fluid speed is controlled so that the air temperature is never below the dew point, i.e. the temperature at which mist is formed. The formation of residues deposits on the heat exchange surfaces is avoided or, anyway, reduced. A temperature control system of this kind can be used with advantage even in case the recovered heat is exploited differently than for pre-heating the ambient air sucked in the machine. For example, the heat transfer exchanger can be designed and arranged for ambient conditioning or for other purposes, or else can be combined with a different air circulation system, rather than with a suction fan, e.g. an air pushing fan arranged upstream of the heat exchanger, rather than downstream.

In substance, the recovered heat quantity is modulated and, if necessary, reduced with respect to the maximum recoverable amount, to the advantage of a more efficient plant management, a reduction in maintenance costs and, in the final analysis, the heat exchange yield.

The machine with which the heat recovery system is associated can advantageously be a stenter. The stenter can comprise one or more modules. Each module can comprise its own air heating system, for instance preferably a gas burner. The burner can be arranged in air vein, i.e. the burner flame can be directly in the air flow circulating in the machine and hitting the fabric under processing. Each module can advantageously comprise a fan or preferably two fans to feed air to blowers arranged above and below the fabric path.

According to a different aspect the invention relates to a method for heat recovery in a machine for treating a fabric through a high temperature air flow, wherein an air change is provided with consequent air discharge from an exhauster. The method of the invention is defined in claim 15 and provides for recovering at least part of the heat contained in the exhausted air flow exiting from the machine by means of a heat-transferring fluid, and transferring heat from the heat-transferring fluid to ambient air entering the machine.

According to an advantageous embodiment of the invention, the method provides for controlling heat recovery such that the exhausted air temperature in the exhauster does not go below a given threshold, typically the dew point, so as to avoid mist in the air circuit.

### Brief description of the drawings

The invention will be better understood by following the description below and the attached drawing, which shows a practical embodiment of the group according to the invention. More in particular, in the drawing:
figure 1 shows a stenter with a stack or exhauster to which the invention is applied;
figure 2 shows a module of the stenter of figure 1;
figure 3 shows a section according to III-III in figure 2;
figure 4 shows an hydraulic diagram of the heat recovery circuit;
figures 5 and 6 show two outer side views of a heat recovery exchanger according to the invention; and
figures 7, 8, and 9 show cross sections according to VII-VII, VIII-VIII and IX-IX of figures 5 and 6.

### Detailed description of an embodiment

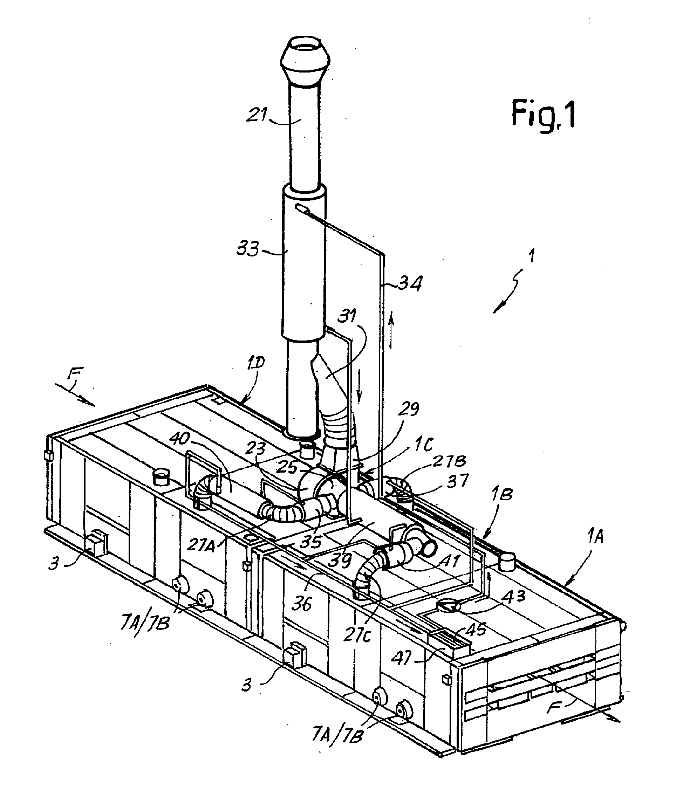

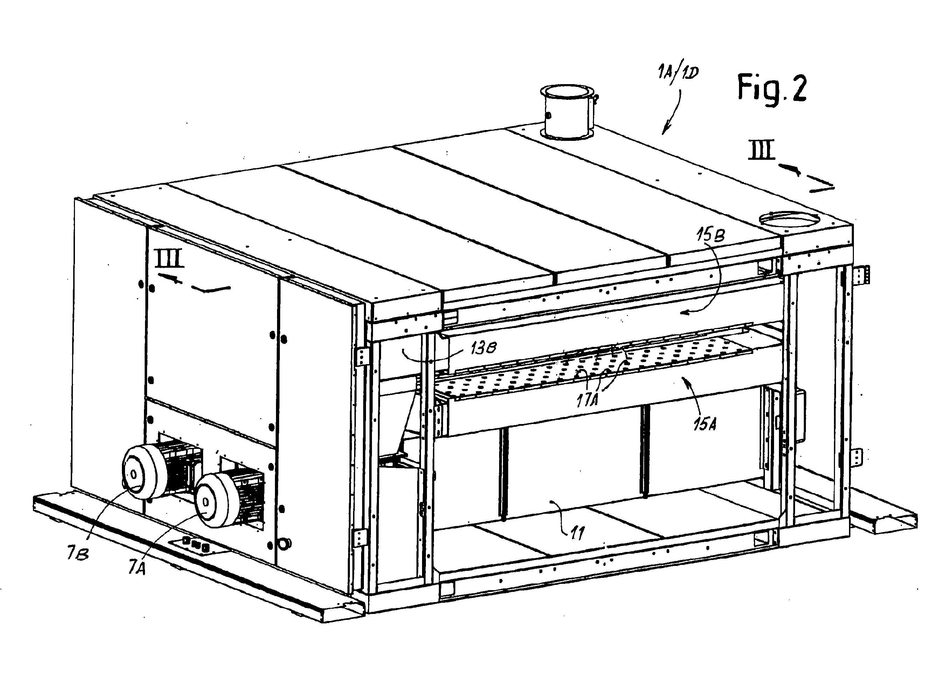

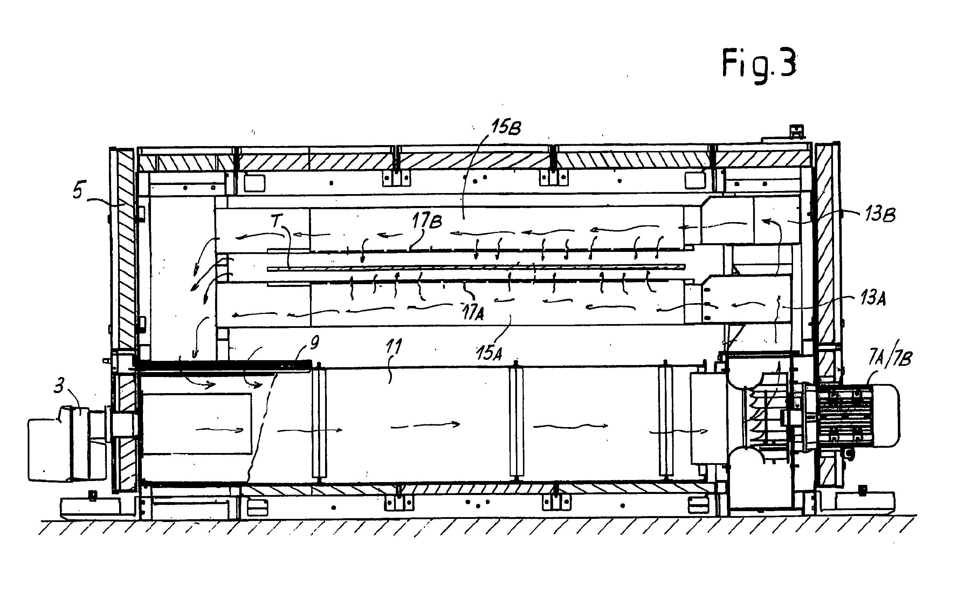

Figure 1 shows an axonometric view of a stenter provided with a recovery system according to the invention. In this embodiment the stenter, indicated as a whole with number 1, comprises four modules 1A, 1B, 1C and 1D. Each of the four modules 1A-1D can be designed in a known manner. Figures 2 and 3 schematically show an embodiment of one of the modules forming the stenter 1. They will be only briefly described, as the specific structure of the stenter module is not an object of the present invention, is known to those skilled in the art and, furthermore, the invention can be embodied in stenters of various kinds.

The same principles and inventive concepts upon which the invention is based and which will be described with reference to the application to a stenter, can be also embodied in other types of machines for hot air treatment of fabrics having similar problems to those briefly mentioned above.

With reference to figures 1 to 3, each module 1A-1D forming the stenter 1 comprises a burner 3 housed inside a space 5. The air circulating inside the machine is sucked through fans 7A, 7B in each module 1A-1D so as to pass through filters 9 and enter a channel 11 extending transversally to the feed direction of a fabric T moving in the machine according to the arrow F (figure 1). The air flowing through the channel 11 is heated by the flame of the burner 3 arranged directly in air vein inside the channel 11.

The air heated by the burner 3 is fed, in a known manner, towards two collectors 13A and 13B, from which it is distributed to blowers 15A, 15B arranged one above the other and provided with holes or apertures 17A, 17B through which hot air, fed by the fans 7A, 7B, passes. The fabric T is thus hit on both sides by the hot air flow generated through the holes or apertures 17A, 17B, all in a known manner.

The air circulating inside the machine is partially exhausted, for instance 5-30% in volume, and replaced with fresh air. The exhausted air is discharged through an exhauster or stack 21. In the illustrated embodiment the exhausted air is fed to the exhauster 21 by means of a fan 23. The fan 23 comprises an inlet collector 25 connected with a series of suction channels 27A, 27B, 27C. In the illustrated example three suction channels are provided, arranged differently on two of the modules 1A-1D forming the stenter. It should be understood that the number of suction channels connected with the inlet collector 25 of the fan 23 can be different than that illustrated. One or more suction channels can be for instance provided for each module 1A-1D of the stenter 1; some modules can be devoid of suction channel.

The discharge channel 29 of the fan 23 is connected to the exhauster 21 by means of a joint 31.

Characteristically, according to the invention, with the exhauster 21 and the suction channels 27A, 27B, 27C heat recovery exchangers are associated, whose function is to recover at least part of the heat energy contained in the exhausted air (intended, in this case, as flow of air and combustion products, as the air heating occurs though burner in air vein).

As schematically indicated in figure 1, in this embodiment a first heat recovery exchanger 33 is arranged around the stack or exhauster 21. A second heat recovery exchanger 35 is arranged on the suction channel 27, a third heat recovery exchanger 37 is arranged on the suction channel 27B and a fourth heat recovery exchanger 39 is arranged on the suction channel 27C. In the illustrated embodiment two further heat recovery exchangers are provided, one labeled 40 on the channel 27A downstream of the exchanger 35 with respect to the air flow along the suction channel 27A, and another labeled 41 on the suction channel 27C downstream of the exchanger 39.

A heat-transferring fluid, for instance water or a mixture of water and an adequate additive, for example ethylene glycol, passes through the heat recovery exchangers 33-41. The exchangers are preferably countercurrent, i.e. the heat-transferring fluid inlet is in the most upstream point with respect to the air path and the heat-transferring fluid outlet is in the most downstream point with respect to the air path.

Through a pump 43 the heat-transferring fluid circulates inside a circuit comprising the various heat recovery exchangers. The circuit furthermore comprises a heat transfer exchanger, indicated with 45, associated with a suction mouth 47 for sucking ambient air inside the stenter 1. The suction mouth 47 can be the only suction mouth or one of more suction mouths or apertures through which the air is sucked that replaces the air exhausted through the exhauster 21.

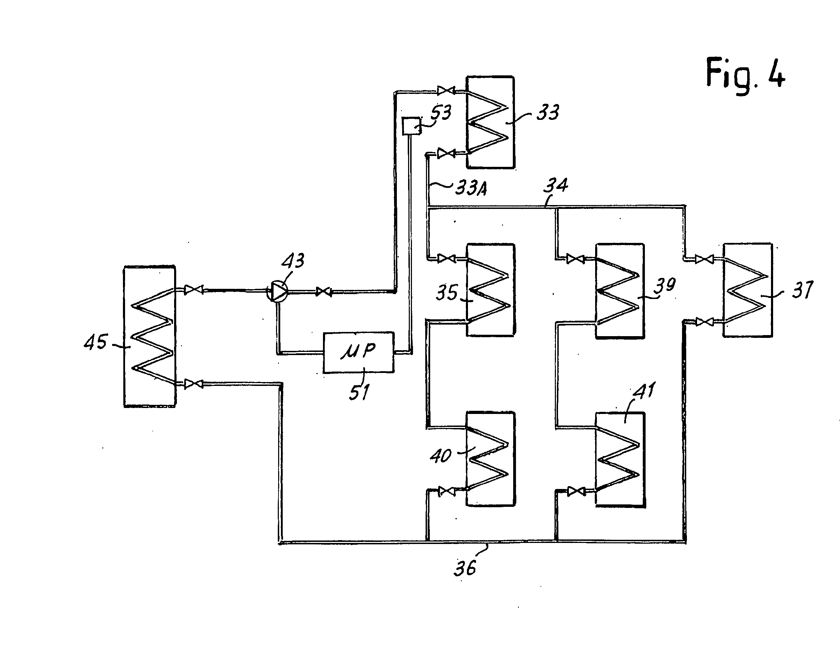

The hydraulic diagram of the heat recovery circuit is illustrated in greater detail in figure 4, wherein the above mentioned various exchanger are indicated with the same reference numbers.

As shown in greater detail in figure 4, the heat recovery exchanger 33 associated with the exhauster 21 is arranged in series with two groups of exchangers, each formed by more heat recovery exchangers in parallel. In particular, the outlet 33A of the heat recovery exchanger 33 is connected through a collector 34 to the inlets of the exchangers 35, 39, and 37. The outlet of these latter is connected with the inlet of the exchangers 40 and 41, whose outlets are connected with a collector 36. In this embodiment, the arrangement is therefore such that the exchanger 33 is in series with three exchangers groups, parallel with one another, constituted as follows: exchangers 35, 40 in series with each other; exchangers 39 and 41 in series with each other; exchanger 37.

The circuit closes on the exchanger 45. In the diagram of figure 4 also the heat-transferring fluid recirculation pump 43 is indicated.

The pump 43 can be controlled by a control system comprising a central unit, for instance a PLC or a microprocessor 51. According to advantageous embodiments, the central unit 51 also receives a temperature signal from a temperature probe 53 arranged in a suitable point of the air circuit, for instance near the outlet of the stack or exhauster 21. In this way it is possible to control the heat-transferring fluid speed inside the circuit formed by the above described exchangers, so that the air temperature inside the exhauster and all the air/fumes circuit does not drop below the condensation temperature. As the coldest area of the air/fumes circuit is the last segment of the exhauster 21, the temperature probe 53 is preferably arranged in the area where air/fumes exit from the exhauster 21, or anyway near said area.

The heat-transferring fluid speed is controlled so as to avoid mist in the air/fumes circuit, in order to prevent, or at least to reduce, the residues deposit on the heat exchange surfaces that can decrease the efficiency of the energy recovery system described above.

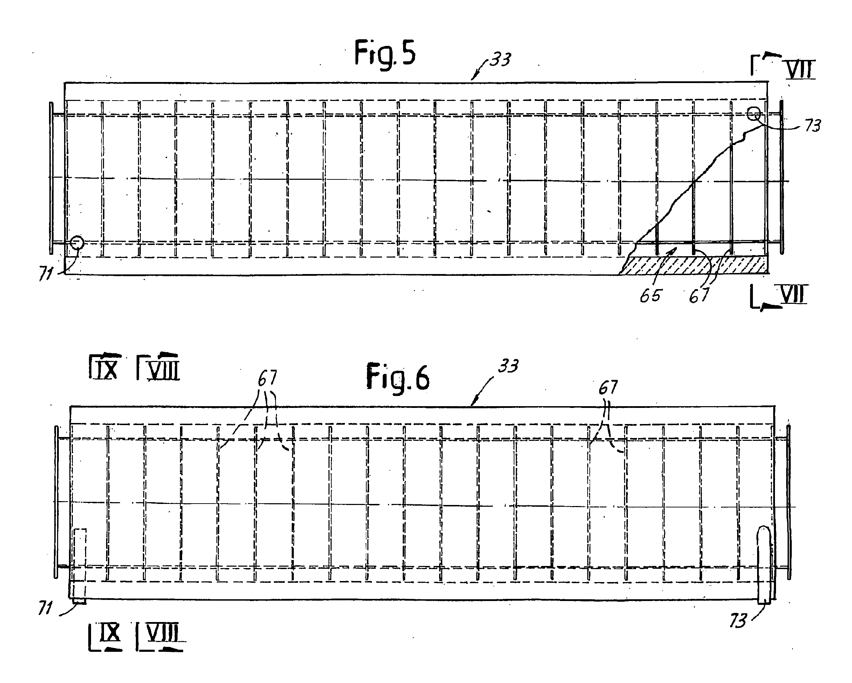

Figures 5 to 8 show in detail e possible embodiment of the heat recovery exchangers 33, 35, 37, 39, 40, and 41. Figures 5 to 8 generically show the exchanger 33, but it should be understood that the other mentioned exchangers can be designed substantially in the same manner, except for the different longitudinal and diametrical dimensions.

In the illustrated embodiment the heat exchanger 33 comprises an inner tubular jacket 61 defining the air passage 61A towards the exhauster 21. An outer tubular jacket 63 is arranged around the inner tubular jacket 61. A space 65 with annular cross section is formed between the two jackets 61 and 63.

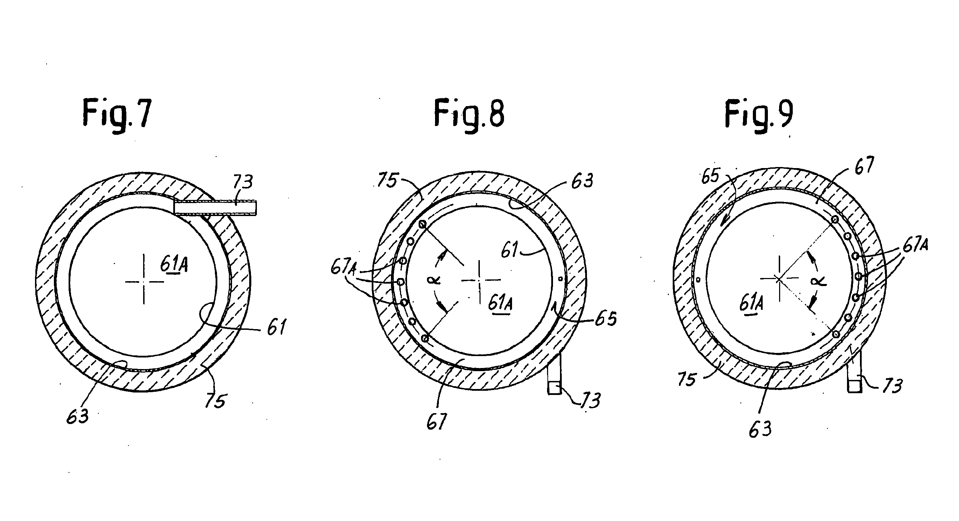

The space 65 is advantageously subdivided, through annular separating walls 67, into a series of cylindrical chambers with annular cross section. As shown in particular in figures 8 and 9, each annular separating wall 67 has a plurality of holes 67A arranged along a part of the annular extension of the wall itself. More in particular, in the illustrated example the holes 67A are distributed along a portion of the annular extension of the separating wall 67 subtended by an angle α. As clearly apparent by comparing figures 8 and 9, the part of annular separating wall provided with the holes 67A is differently directed in adjacent and consecutive walls. In the two consecutive annular separating walls 67 (shown in figures 8 and 9), the holes 67A are in opposite areas of the annular extension of the separating walls and of the cylindrical chambers with annular cross section that they define inside the space between the inner tubular jacket 61 and the outer tubular jacket 63. Thanks to this arrangement, the heat-transferring fluid, inserted in the exchanger 33 through an inlet 71 and exiting from the exchanger through an outlet 73, circulates with an axial and circumferential movement, passing through all the annular cylindrical chambers formed by the separating walls 67, thus obtaining an efficient heat exchange.

The outer tubular jacket 63 can be advantageously covered by a layer 75 made of heat insulating material.

It is understood that the drawing only shows an example provided by way of a practical arrangement of the invention, which can vary in forms and arrangements without however departing from the scope of the concept underlying the invention. Any reference numbers in the appended claims are provided for the sole purpose of facilitating reading of the claims in the light of the description and the drawing, and do not in any manner limit the scope of protection represented by the claims.

## Claims

1. A machine for treating a fabric through a high temperature air flow comprising:
- a fabric feed path;
- at least one system for hot air circulation through the fabric;
- at least one air heating system (3, 11);
- an exhauster (21) to eject a part of the air from said machine;
- at least one ambient air suction inlet (47);
- at least one air suction fan (7A, 7B) inside said machine, arranged to suck ambient air in said machine through said at least one ambient air suction inlet (47);
- a heat recovery circuit (33, 34, 35, 37, 39, 40, 41, 45) with at least one heat recovery exchanger (33, 35, 37, 39, 40, 41) for recovering heat from the air fed to said exhauster (21) and at least one heat transfer exchanger (45) for transferring heat to ambient air sucked in said machine through said at least one ambient air suction inlet (47), said heat transfer exchanger (45) being arranged in said at least one ambient air suction inlet (47);
wherein a heat-transferring fluid circulating in said exchangers (33, 35, 37, 39, 40, 41, 45) absorbs heat from the air fed to the exhauster (21) and releases heat through said heat transfer exchanger (45) to ambient air sucked through said heat transfer exchanger by said at least one air suction fan (7A; 7B) arranged inside said machine, downstream the heat transfer exchanger (45); and wherein said at least one air suction fan (7A, 7B) is arranged and controlled to circulate air in the machine, through said air heating system (3, 11) and delivers heated air to air blowers (15A, 15B) arranged along the fabric feed path; and wherein said at least one heat recovery exchanger (33, 35, 37, 39, 40, 41) comprises an inner air passage (61A) surrounded by an outer passage (65) for said heat-transferring fluid.

2. Machine according to claim 1, wherein said at least one air suction fan (7A, 7B) is arranged for circulating air through said air heating system (3; 11).

3. Machine according to claim 1, **characterized in that** said air heating system comprises a gas burner (3) through which air is sucked by said at least one air suction fan (7A; 7B).

4. Machine as claimed in claim 1, or 2, or 3, **characterized by** comprising a plurality of heat recovery exchangers (33, 35, 37, 39, 40, 41) arranged in a plurality of parts of an air ejection circuit for ejecting air through said exhauster.

5. Machine as claimed in one or more of the previous claims, **characterized in that** said at least one heat recovery exchanger (33, 35, 37, 39, 40, 41) comprises: an inner tubular jacket (61) defining said inner air passage (61A) towards the exhauster (21); an outer tubular jacket (63) said outer passage (65) for said heat-transferring fluid being formed by a space between the inner tubular jacket (61) and the outer tubular jacket (65) for the circulation of said heat-transferring fluid.

6. Machine as claimed in claim 5, **characterized in that** said space is subdivided into a plurality of cylindrical chambers with annular cross section, arranged in series and separated from one another by a plurality of annular separating walls (67).

7. Machine as claimed in claim 6, **characterized in that** said separating walls (67) comprise passage holes (67A) to allow the heat-transferring fluid to flow from an annular cylindrical chamber to the other.

8. Machine as claimed in claim 7, **characterized in that** the separating walls (67) have passage holes (67A) on a limited portion of their circumferential extensions and that adjacent separating walls (67) are arranged with the respective passage holes (67A) angularly staggered relative to one another to impart to the heat-transferring fluid a movement with an axial component and a circumferential component around the axis of the annular cylindrical chamber.

9. Machine as claimed in one or more of the previous claims, **characterized by** comprising a plurality of heat recovery exchangers (33, 35, 37, 39, 40, 41) arranged in series and in parallel on air ducts towards said exhauster (21).

10. Machine as claimed in claim 9, **characterized by** comprising: a fan (23) for supplying air towards said exhauster (21); a plurality of suction channels (27A-27C) connected to an inlet of said fan (23); a discharge channel (29) connecting the fan outlet to the exhauster (21); a plurality of heat recovery exchangers (35, 37, 39, 40, 41) on said suction channels (27A, 27C); at least one heat recovery exchanger (33) on said discharge channel (29).

11. Machine as claimed in claim 10, **characterized in that** said heat recovery exchanger (33) on the discharge channel (29) is arranged in series and upstream of a plurality of heat recovery exchangers (35, 37, 39, 40, 41) in parallel with one another and arranged on said suction channels (27A-27C).

12. Machine as claimed in one or more of the previous claims, **characterized by** comprising a control system (51, 53) for controlling the flow of said heat-transferring fluid in order to maintain the air temperature at the exhauster (21) always above a minimum threshold, to avoid mist.

13. Machine as claimed in claim 12, **characterized by** comprising a heat-transferring fluid circulation pump (43) controlled by said control system (51, 53).

14. Machine as claimed in one or more of the previous claims, **characterized by** being a stenter.

15. A method for heat recovery in a machine for treating a fabric through a high temperature air flow, comprising the steps of: extracting heat from an exhausted air flow exiting from said machine by means of a heat-transferring fluid circulating in at least one heat recovery exchanger (33, 35, 37, 39, 40, 41) comprising an inner air passage (61A) surrounded by an outer passage (65) for said heat-transferring fluid; and transferring heat from said heat-transferring fluid to an ambient air flow sucked in said machine through an ambient air suction inlet by an air suction fan (7A, 7B) arranged in said machine, downstream of a heat transfer exchanger (45) through which said ambient air is sucked; said air suction fan (7A, 7B) delivering heated air to at least one system (15A, 15B) for hot air circulation through the fabric.

16. Method as claimed in claim 15, **characterized in that** said air suction fan (7A, 7B)circulates said air through an air heating system (3, 11).

17. Method as claimed in claim 15 or 16, **characterized by** controlling heat recovery such that the exhausted air temperature in the exhauster (21) does not drop below a given threshold so as to avoid mist in the air circuit.

## Patentansprüche

1. Maschine zum Behandeln eines Stoffes durch einen Luftstrom hoher Temperatur, die folgendes umfasst:
- einen Stoffzufuhrpfad;
- mindestens ein System zur Zirkulation heißer Luft durch den Stoff;
- mindestens ein Lufterwärmungssystem (3, 11);
- einen Lüfter (21) zum Ausstoßen eines Teils der Luft aus der Maschine;
- mindestens einen Umgebungsluftansaugeinlass (47);
- mindestens einen Luftsaugzugventilator (7A, 7B) im Inneren der Maschine, der eingerichtet ist, Umgebungsluft durch den mindestens einen Umgebungsluftansaugeinlass (47) in die Maschine einzusaugen;
- einen Wärmerückgewinnungskreislauf (33, 34, 35, 37, 39, 40, 41, 45) mit mindestens einem Wärmerückgewinnungsaustauscher (33, 35, 37, 39, 40, 41) zum Rückgewinnen von Wärme aus der Luft, die dem Lüfter (21) zugeführt wird, und mindestens einem Wärmeübertragungsausstauscher (45) zum Übertragen von Wärme auf Umgebungsluft, die durch den mindestens einen Umgebungsluftansaugeinlass (47) in die Maschine gesaugt wird, wobei der Wärmeübertragungsaustauscher (45) in dem mindestens einen Umgebungsluftansaugeinlass (47) angeordnet ist;
wobei ein Wärmeübertragungsfluid, das in den Austauschern (33, 35, 37, 39, 40, 41, 45) zirkuliert, Wärme aus der Luft, die dem Lüfter (21) zugeführt wird, aufnimmt und Wärme durch den Wärmeübertragungsaustauscher (45) an Umgebungsluft, die durch den Wärmeübertragungsaustauscher durch den mindestens einen Luftsaugzugventilator (7A; 7B), der im Inneren der Maschine, dem Wärmeübertragungsaustauscher (45) nachgeschaltet, angeordnet ist, abgibt; und wobei der mindestens eine Luftsaugzugventilator (7A, 7B) zum Zirkulieren von Luft in der Maschine durch das Lufterwärmungssystem (3, 11) eingerichtet und gesteuert ist und erwärmte Luft an die Luftgebläse (15A, 15B) abgibt, die entlang des Stoffzufuhrpfads angeordnet sind; und wobei der mindestens eine Wärmerückgewinnungsaustauscher (33, 35, 37, 39, 40, 41) einen inneren Luftdurchlass (61A), der von einem äußeren Durchlass (65) für das Wärmeübertragungsfluid umgeben ist, umfasst.

2. Maschine gemäß Anspruch 1, wobei der mindestens eine Luftsaugzugventilator (7A, 7B) zum Zirkulieren von Luft durch das Lufterwärmungssystem (3; 11) eingerichtet ist.

3. Maschine gemäß Anspruch 1, **dadurch gekennzeichnet, dass** das Lufterwärmungssystem einen Gasbrenner (3) umfasst, durch den Luft durch den mindestens einen Luftsaugzugventilator (7A, 7B) eingesaugt wird.

4. Maschine gemäß Anspruch 1 oder 2 oder 3, gekennzeichnet durch das Umfassen einer Anzahl an Wärmerückgewinnungsaustauschern (33, 35, 37, 39, 40, 41), die in einer Anzahl von Teilen eines Luftausstoßkreislaufes zum Ausstoßen von Luft durch den Lüfter angeordnet sind.

5. Maschine gemäß einem oder mehreren der vorhergehenden Ansprüche, **dadurch gekennzeichnet, dass** der mindestens eine Wärmerückgewinnungsaustauscher (33, 35, 37, 39, 40, 41) folgendes umfasst: einen inneren rohrförmigen Mantel (61), der den inneren Luftdurchlass (61A) in Richtung des Lüfters (21) definiert; einen äußeren rohrförmigen Mantel (63), wobei der äußere Durchlass (65) für das Wärmeübertragungsfluid durch einen Raum zwischen dem inneren rohrförmigen Mantel (61) und dem äußeren rohrförmigen Mantel (65) für die Zirkulation des Wärmeübertragungsfluids gebildet ist.

6. Maschine gemäß Anspruch 5, **dadurch gekennzeichnet, dass** der Raum in eine Anzahl von zylindrischen Kammern mit ringförmigem Querschnitt unterteilt ist, die hintereinander angeordnet sind und voneinander durch eine Anzahl von ringförmigen Trennwänden (67) getrennt sind.

7. Maschine gemäß Anspruch 6, **dadurch gekennzeichnet, dass** die Trennwände (67) Durchlasslöcher (67A) umfassen, um das Wärmeübertragungsfluid von einer ringförmigen Zylinderkammer zu der anderen strömen zu lassen.

8. Maschine gemäß Anspruch 7, **dadurch gekennzeichnet, dass** die Trennwände (67) Durchlasslöcher (67A) auf einem beschränkten Teil ihrer Umfangserstreckungen aufweisen und dass angrenzende Trennwände (67) mit den jeweiligen Durchlasslöchern (67A) relativ zueinander schräg versetzt sind, um dem Wärmeübertragungsfluid eine Bewegung mit einer axialen Komponente und einer Umfangskomponente um die Achse der ringförmigen zylindrischen Kammer zu verleihen.

9. Maschine gemäß einem oder mehreren der vorhergehenden Ansprüche, gekennzeichnet durch das Umfassen einer Anzahl von Wärmerückgewinnungsaustauschern (33, 35, 37, 39, 40, 41), die auf Luftführungen in Richtung des Lüfters (21) hintereinander und parallel angeordnet sind.

10. Maschine gemäß Anspruch 9, gekennzeichnet, durch: ein Gebläse (23) zum Zuführen von Luft in Richtung des Lüfters (21); eine Anzahl von Saugkanälen (27A-27C), die mit einem Einlass des Gebläses (23) verbunden sind; einen Ausstoßkanal (29), der den Gebläseausgang mit dem Lüfter (21) verbindet; eine Anzahl von Wärmerückgewinnungsaustauschern (35, 37, 39, 40, 41) auf den Saugkanälen (27A, 27C); mindestens einen Wärmerückgewinnungsaustauscher (33) auf dem Ausstoßkanal (29).

11. Maschine gemäß Anspruch 10, **dadurch gekennzeichnet, dass** der Wärmerückgewinnungsaustauscher (33) auf dem Ausstoßkanal (29) in Reihe mit und vorgeschaltet zu einer Anzahl von Wärmerückgewinnungsaustauschern (35, 37, 39, 40, 41), parallel zueinander und angeordnet auf den Saugkanälen (27A-27C), angeordnet ist.

12. Maschine gemäß einem oder mehreren der vorhergehenden Ansprüche, **dadurch gekennzeichnet, dass** sie ein Steuerungssystem (51, 53) zum Steuern des Flusses des Wärmeübertragungsfluids umfasst, um die Lufttemperatur an dem Lüfter (21) immer über einer Minimalschwelle, zum Vermeiden von Nebel, zu halten.

13. Maschine gemäß Anspruch 12, gekennzeichnet durch eine Wärmeübertragungsfluidzirkulationspumpe (43), die durch das Steuerungssystem (51, 53) gesteuert wird.

14. Maschine gemäß einem oder mehreren der vorhergehenden Ansprüche, **dadurch gekennzeichnet, dass** sie eine Spannmaschine (Stenter) ist.

15. Verfahren zur Wärmerückgewinnung in einer Maschine zum Behandeln eines Stoffes durch einen Luftfluss hoher Temperatur, das die folgenden Schritte umfasst: Nutzen von Wärme aus einem ausgestoßenen Luftstrom, der aus der Maschine austritt, mittels eines Wärmeübertragungsfluids, das in mindestens einem Wärmerückgewinnungsausstauscher (33, 35, 37, 39, 40, 41) zirkuliert, der einen inneren Luftdurchlass (61A) umfasst, der von einem äußeren Durchlass (65) für das Wärmeübertragungsfluid umgeben ist; und Übertragen von Wärme aus dem Wärmeübertragungsfluid an einen Umgebungsluftstrom, der durch einen Umgebungsluftansaugeinlass mittels eines Luftsaugzugventilators (7A, 7B), der in der Maschine, einem Wärmeübertragungsaustauscher (45), durch den Umgebungsluft gesaugt wird, nachgeschaltet, angeordnet ist, in die Maschine gesaugt wird; wobei der Luftsaugzugventilator (7A, 7B) erwärmte Luft an mindestens ein System (15A, 15B) für Warmluftzirkulation durch den Stoff abgibt.

16. Verfahren gemäß Anspruch 15, **dadurch gekennzeichnet, dass** der Luftsaugzugventilator (7A, 7B) Luft durch ein Lufterwärmungssystem (3, 11) zirkuliert.

17. Verfahren gemäß Anspruch 15 oder 16, gekennzeichnet durch das Steuern von Wärmerückgewinnung derart, dass die Temperatur von Luft, die in dem Lüfter (21) ausgestoßen wird, nicht unter eine gegebene Schwelle fällt, um so Nebel in dem Luftkreislauf zu vermeiden.

## Revendications

1. Une machine pour traiter un tissu au moyen d'un flux d'air à haute température, comprenant :
- un trajet d'alimentation du tissu ;
- au moins un système de circulation d'air chaud à travers le tissu ;
- au moins un système de chauffage d'air (3, 11) ;
- un extracteur (21) pour éjecter une partie de l'air de la machine ;
- au moins une entrée d'aspiration d'air ambiant (47) ;
- au moins un aspirateur d'air (7A, 7B) à l'intérieur de ladite machine, agencé pour aspirer de l'air ambiant dans ladite machine à travers la ou lesdites entrées d'aspiration d'air ambiant (47) ;
- un circuit de récupération de chaleur (33, 34, 35, 37, 39, 40, 41, 45) avec au moins un échangeur de récupération de chaleur (33, 35, 37, 39, 40, 41) pour récupérer de la chaleur à partir de l'air apporté audit extracteur (21) et au moins un échangeur de transfert de chaleur (45) pour transférer de la chaleur à l'air ambiant aspiré dans ladite machine à travers ladite entrée d'aspiration d'air ambiant (47), ledit échangeur de transfert de chaleur (45) étant agencé dans ladite entrée d'aspiration d'air ambiant (47) ;
dans lequel un fluide de transfert de chaleur circulant dans lesdits échangeurs (33, 35, 37, 39, 40, 41, 45) absorbe de la chaleur provenant de l'air apporté à l'extracteur (21) et libère de la chaleur à travers ledit échangeur de transfert de chaleur (45) dans l'air ambiant aspiré à travers ledit échangeur de transfert de chaleur par ledit aspirateur d'air (7A ; 7B) agencé à l'intérieur de ladite machine, en aval de l'échangeur de transfert de chaleur (45) ; et dans lequel ledit aspirateur d'air (7A, 7B) est agencé et commandé pour faire circuler de l'air dans la machine, à travers ledit système de chauffage d'air (3, 11) et délivre de l'air chauffé à des souffleurs d'air (15A, 15B) agencés le long du trajet d'alimentation du tissu ; et dans lequel ledit échangeur de récupération de chaleur (33, 35, 37, 39, 40, 41) comprend un passage d'air interne (61A) entouré par un passage externe (65) pour ledit fluide de transfert de chaleur.

2. Machine selon la revendication 1, dans laquelle le ou lesdits aspirateurs d'air (7A, 7B) est agencé pour faire circuler de l'air à travers ledit système de chauffage d'air (3 ; 11).

3. Machine selon la revendication 1, **caractérisée en ce que** ledit système de chauffage d'air comprend un brûleur à gaz (3) au travers duquel de l'air est aspiré par ledit aspirateur d'air (7A ; 7B).

4. Machine selon la revendication 1, 2 ou 3, **caractérisée par le fait qu'**elle comprend une pluralité d'échangeurs de récupération de chaleur (33, 35, 37, 39, 40, 41) agencés dans une pluralité de pièces d'un circuit d'éjection d'air pour éjecter de l'air à travers ledit extracteur.

5. Machine selon une ou plusieurs des revendications précédentes, **caractérisée en ce que** ledit échangeur de récupération de chaleur (33, 35, 37, 39, 40, 41) comprend : une enveloppe tubulaire interne (61) formant ledit passage d'air interne (61A) vers l'extracteur (21) ; une enveloppe tubulaire externe (63), ledit passage externe (65) pour ledit fluide de transfert de chaleur étant formé par un espace entre l'enveloppe tubulaire interne (61) et l'enveloppe tubulaire externe (65) pour la circulation dudit fluide de transfert de chaleur.

6. Machine selon la revendication 5, **caractérisée en ce que** ledit espace est subdivisé en une pluralité de chambres cylindriques ayant une section transversale annulaire, agencées en série et séparées l'une de l'autre par une pluralité de parois de séparation annulaires (67).

7. Machine selon la revendication 6, **caractérisée en ce que** lesdites parois de séparation (67) comprennent des trous de passage (67A) pour permettre au fluide de transfert de chaleur de circuler d'une chambre cylindrique annulaire à une autre.

8. Machine selon la revendication 7, **caractérisée en ce que** les parois de séparation (67) ont des trous de passage (67a) sur une portion limitée de leurs extensions circonférentielles et **en ce que** des parois de séparation adjacentes (67) sont agencées avec des trous de passage respectifs (67A) décalés angulairement les uns par rapport aux autres pour donner au fluide de transfert de chaleur un mouvement avec une composante axiale et une composante circonférentielle autour de l'axe de la chambre cylindrique annulaire.

9. Machine selon une ou plusieurs des revendications précédentes, **caractérisée par le fait qu'**elle comprend une pluralité d'échangeurs de récupération de chaleur (33, 35, 37, 39, 40, 41) agencés en série et en parallèle sur des conduits d'air vers ledit extracteur (21).

10. Machine selon la revendication 9, **caractérisée par le fait qu'**elle comprend : un ventilateur (23) pour fournir de l'air vers ledit extracteur (21) ; une pluralité de canaux d'aspiration (27A-27C) reliés à une entrée dudit ventilateur (23) ; un canal d'évacuation (29) reliant la sortie du ventilateur à l'extracteur (21) ; une pluralité d'échangeurs de récupération de chaleur (35, 37, 39, 40, 41) sur lesdits canaux d'aspiration (27A, 27C) ; au moins un échangeur de récupération de chaleur (33) sur ledit canal d'évacuation (29).

11. Machine selon la revendication 10, **caractérisée en ce que** ledit échangeur de récupération de chaleur (33) sur le canal d'évacuation (29) est agencé en série et en amont d'une pluralité d'échangeurs de récupération de chaleur (35, 37, 39, 40, 41) parallèles les uns aux autres et agencés sur lesdits canaux d'aspiration (27A-27C).

12. Machine selon une ou plusieurs des revendications précédentes, **caractérisée par le fait qu'**elle comprend un système de commande (51, 53) pour commander le flux dudit fluide de transfert de chaleur afin de maintenir la température de l'air au niveau de l'extracteur (21) toujours au-dessus d'un seuil minimum, pour éviter l'humidité.

13. Machine selon la revendication 12, **caractérisée par le fait qu'**elle comprend un pompe de circulation de fluide de transfert de chaleur (43) commandée par ledit système de commande (51, 53).

14. Machine selon une ou plusieurs des revendications précédentes, **caractérisée en ce qu'**elle est une rame.

15. Un procédé de récupération de chaleur dans une machine de traitement d'un tissu au moyen d'un flux d'air à haute température, comprenant les étapes consistant à : extraire de la chaleur à partir d'un flux d'air extrait de ladite machine au moyen d'un fluide de transfert de chaleur circulant dans au moins un échangeur de récupérateur de chaleur (33, 35, 37, 39, 40, 41) comprenant un passage d'air interne (61A) entouré par un passage d'air externe (65) pour ledit fluide de transfert de chaleur ; et transférer de la chaleur du fluide de transfert de chaleur à un flux d'air ambiant aspiré dans ladite machine à travers une entrée d'aspiration d'air ambiant par un aspirateur d'air (7A, 7B) agencé dans ladite machine, en aval d'un échangeur de transfert de chaleur (45) au moyen duquel ledit air ambiant est aspiré ; ledit aspirateur d'air (7A, 7B) délivrant de l'air chauffé à au moins un système (15A, 15B) de circulation d'air chaud à travers le tissu.

16. Procédé selon la revendication 15, **caractérisé en ce que** ledit aspirateur d'air (7A, 7B) fait circuler ledit air à travers un système de chauffage d'air (3, 11).

17. Procédé selon la revendication 15 ou 16, **caractérisé par** la commande de la récupération de chaleur de telle sorte que la température de l'air extrait dans l'extracteur (21) ne tombe en dessous d'un seuil donné de façon à éviter la présence d'humidité dans le circuit d'air.
